(19) Europäisches Patentamt
European Patent Office
Office européen des brevets

(11) **EP 4 103 650 B1**

(12) **EUROPÄISCHE PATENTSCHRIFT**

(45) Veröffentlichungstag und Bekanntmachung des Hinweises auf die Patenterteilung:
**02.08.2023 Patentblatt 2023/31**

(21) Anmeldenummer: **20704517.0**

(22) Anmeldetag: **10.02.2020**

(51) Internationale Patentklassifikation (IPC):
**C08L 83/04** (2006.01)   **C08K 3/22** (2006.01)
**C08K 3/34** (2006.01)

(52) Gemeinsame Patentklassifikation (CPC):
(C-Sets verfügbar)
**C08L 83/04;** C08G 77/12; C08G 77/20;
C08K 2003/2206; C08K 2003/2217       (Forts.)

(86) Internationale Anmeldenummer:
**PCT/EP2020/053282**

(87) Internationale Veröffentlichungsnummer:
**WO 2021/160238 (19.08.2021 Gazette 2021/33)**

(54) **SILICONKAUTSCHUKZUSAMMENSETZUNGEN UND DEREN VULKANISATE FÜR DEN EINSATZ IN TRINKWASSERANWENDUNGEN**

SILICONE RUBBER COMPOSITIONS AND THEIR VULCANIZATES FOR USE IN POTABLE WATER APPLICATIONS

COMPOSITIONS DE CAOUTCHOUC DE SILICONE ET LEURS VULCANISATS DESTINÉS À ÊTRE UTILISÉS DANS DES APPLICATIONS D'EAU POTABLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**21.12.2022 Patentblatt 2022/51**

(73) Patentinhaber: **Wacker Chemie AG**
**81737 München (DE)**

(72) Erfinder:
• **HAIDER, Joachim**
**84489 Burghausen (DE)**
• **DIETL, Stefan**
**84489 Burghausen (DE)**
• **FRENZEL, Ulrich**
**41542 Dormagen (DE)**
• **FUCHS, Werner**
**84387 Julbach (DE)**

(74) Vertreter: **Mieskes, Klaus Theoderich et al**
**Wacker Chemie AG**
**Intellectual Property**
**Hanns-Seidel-Platz 4**
**81737 München (DE)**

(56) Entgegenhaltungen:
**WO-A1-00/46291**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

(52) Gemeinsame Patentklassifikation (CPC): (Forts.)

C-Sets
**C08L 83/04, C08L 83/00, C08K 3/36, C08K 5/14,
C08K 3/22;
C08L 83/04, C08L 83/00, C08K 3/36, C08K 5/14,
C08K 3/34;
C08L 83/04, C08L 83/00, C08K 3/36, C08K 5/56,
C08K 3/22;
C08L 83/04, C08L 83/00, C08K 3/36, C08K 5/56,
C08K 3/34**

## Beschreibung

Die vorliegende Erfindung betrifft Siliconkautschukzusammensetzungen und deren Vulkanisate für den Einsatz im Trinkwasser-, Lebensmittel-, medizinischen- und pharmazeutischen Bereich.

## Stand der Technik

Vulkanisate von Siliconkautschuk finden aufgrund ihrer exzellenten mechanischen Eigenschaften, thermischen Beständigkeit und im Vergleich zu organischen Elastomeren hohen Reinheit breiten Einsatz als Artikel im Bereich von Anwendungen mit Lebensmittel- oder Trinkwasserkontakt, wie z.B. als Schläuche, Dichtungen, Bauteile von Ventilen etc.

Bekannte Beispiele sind Schlauchanschlussleitungen für stationär betriebene Kaffeemaschinen in der Gastronomie oder Wasserspender mit direktem Anschluss an das Trinkwassernetz. Weitere Beispiele sind flexible Schlauchleitungen für ausziehbare Brauseköpfe an Spülbecken im Küchenbereich oder flexible Schlauchleitungen für Armaturenanschlüsse, Brauseköpfe für Waschbecken, Duschen und Badewannen im Sanitärbereich. Weitere Beispiele sind Dichtungen in Armaturen für Trinkwasserkontakt.

Alle genannten Anwendungen zeichnen sich im Unterschied zu technischen Lösungen aus thermoplastischen Materialien durch ihre ausgezeichneten elastischen Eigenschaften, wie insbesondere hohe Biegsamkeit, hohe Reißdehnung und hohen Weiterreißwiderstand, aus. Dies ermöglicht eine einfache Montage und sicheren Betrieb von Schläuchen oder anderen Formteilen auch unter räumlich begrenzten Voraussetzungen.

Die Zulassung von Formartikeln für Trinkwasseranwendungen wird in der Europäischen Union durch die einzelnen Mitgliedsstaaten geregelt. In Deutschland gilt derzeit für Silicone die "Übergangsempfehlung zur vorläufigen trinkwasserhygienischen Beurteilung von Silikonen im Kontakt mit Trinkwasser (SilikonÜbergangsempfehlung)" vom 11.03.2019, die auf die Leitlinie zur Beurteilung von organischen Materialien in Kontakt mit Trinkwasser "KTW-Leitlinie" vom 03.2016 verweist (im Folgenden als KTW-Leitlinie bezeichnet) , in Großbritannien das Water Regulations Advisory Scheme (WRAS) und in Frankreich die Accredition de Conformité Sanitaire (ACS).

Alle genannten Regelungen begrenzen zum Schutz des Verbrauchers den zulässigen Anteil wasserextrahierbarer Anteile. Die Abgabe niedermolekularer Anteile bei Wasserextraktion, gemessen als TOC (Gesamtgehalt der Probe an organischem Kohlenstoff) hängt dabei bekanntermaßen stark von den eingesetzten Rohstoffen und der Rezepturgestaltung, wie z.B. einer geeigneten Wahl des Siliconpolymers, der Füllstoffe, der Additive und des Vernetzungssystems ab.

Die geeignete Wahl der Vulkanisations- und Temperbedingungen bei der Herstellung der Vulkanisate spielt ebenfalls eine bedeutende Rolle. Eine Temperung (z.B. 4 h/200 °C im Umluftofen) im Anschluss an die Vulkanisation stellt dabei das gebräuchlichste Reinigungsverfahren dar, um den Anteil niedermolekularer Anteile im Elastomerprodukt zu reduzieren. Dieses Verfahren lässt sich jedoch nicht beliebig lange und bei jeder Temperatur durchführen, da bei zu langen Temperzeiten und zu hohen Temperaturen ein thermooxidativer Alterungsprozess einsetzt, der zur Neubildung niedermolekularer Abbauprodukte führt. Dies kann in den besonders strengen Anforderungen der KTW-Leitlinie für die Kategorie "Rohre mit DN < 80 mm" für Warmwasser (60°C) oder Heißwasser (85°C) zu einer Überschreitung der zulässigen Grenzwerte für den TOC führen.

Peroxidisch vernetzende Systeme können zudem in Einzelfällen - auch nach sorgfältiger Temperung - Spuren niedermolekularer Peroxid-Spaltprodukte in wäßrige Medien abgeben, was zu einer unerwünschten Geruchs- und Geschmacksbeeinträchtigung führt.

Aus diesem Grund werden für die Erfüllung der höchsten Anforderungen im Stand der Technik bevorzugt additionsvernetzende Siliconkautschukmischungen eingesetzt. Beispiele für handelsübliche Siliconkautschuksysteme sind beispielsweise Produkte aus der ELASTOSIL® R*plus* 4305 Serie der Fa. Wacker Chemie AG oder der ADDISIL® IND 20X0 E Produktreihe der Fa. Momentive Performance Materials. Dabei besteht, wie oben erwähnt, die Anforderung, die Menge aus dem Vulkanisat in die wäßrige Phase übergehender organischer Bestandteile so weit wie möglich abzusenken, um so die Grenzwerte bzgl. TOC wie sie z.B. in der KTW-Leitlinie genannt werden, einhalten zu können. Analoges gilt für medizinische und pharmazeutische Anwendungen, bei denen es ebenfalls gilt, die Menge migrierbarer Bestandteile ("Leachables und Extractables") so weit wie möglich zu verringern (siehe z.B. VERORDNUNG (EU) 2017/745 DES EUROPÄISCHEN PARLAMENTS UND DES RATES; Abschnitt 10.4.1).

Es besteht somit die Nachfrage nach Siliconkautschukvulkanisaten, die einen möglichst geringen Anteil an extrahierbaren Bestandteilen, insbesondere extrahierbaren organischen Bestandteilen, gemessen als TOC, aufweisen, gleichzeitig gute mechanische Eigenschaften und hohe Transparenz haben und keine kritischen Inhaltsstoffe aufweisen, die einen Einsatz in Kontakt mit Trinkwasser und / oder wäßrigen Zubereitungen für Genußzwecke oder medizintechnische/pharmazeutische Anwendungen verhindern würden.

RU2293657 beschreibt die Herstellung verstärkter Siliconelastomerschläuche für Trinkwasser und medizintechnische Anwendungen, ohne jedoch näher auf die verwendeten Siliconkautschukmischungen und deren Zusammensetzung einzugehen.

Im Stand der Technik sind zudem diverse Zuschlagstoffe für Siliconkautschukmischungen bekannt, um für eine definierte Anwendung die notwendigen Eigenschaften des Vulkanisats einzustellen.

GB 2460513 A beschreibt die Verwendung von calcinierten Füllstoffen, darunter Alumosilikaten, als verstärkende Füllstoffe in Siliconkautschukmischungen für extrudierte Profile, Dichtungen an Verglasungen und Bauanwendungen. US6271299B1, US6239378B1, US6084002 und GB2360780A verwenden jeweils Wollastonit als Füllstoff oder Additiv zur Verbesserung der Brandschutzeigenschaften. In allen genannten Anwendungen sind jedoch hohe Einsatzmengen erforderlich, um die gewünschten mechanischen oder Brandschutzeigenschaften erzielen zu können. JP2019059889A beschreibt die Verwendung von natürlichen Zeolithen in kondensationsvernetzenden Siliconkautschukmischungen zur verbesserten Kontrolle von Feuchtigkeit, wenn eine Bauteilgeometrie nur unzureichenden Luftaustausch zulässt.

DE1127586B beschreibt den Einsatz von Alumosilicaten als Trägermaterial für Vernetzer und Katalysatoren. In RU2285703C2 wird die Verwendung von Alumosilikaten für verbesserte Frostund Feuchtigkeitsbeständigkeit sowie zur Verringerung des Druckverformungsrestes beschrieben.

CN109666301 setzt Calcium- und Magnesiumsilikate als Additive in Flüssigsiliconkautschukmischungen zur Verbesserung der Ölbeständigkeit für Automobilanwendungen ein.

WO 00/46291 A1 offenbart eine Zusammensetzung, die 100 Gew. Teile eines vinylterminierten Polysiloxans, 24 Gew. Teile Kieselsäure, 75 Gew. Teile Calcium Silikat und 6 Gew. Teile eines Vernetzers enthält. Die Kieselsäure weist eine Partikelgrösse von weniger als 30 microns.

Aus der Literatur ist allerdings die eingeschränkte Beständigkeit von Siliconelastomeren gegenüber alkalischen Medien bekannt, siehe z.B. Seite 163, Bayer AG, Handbuch für die Gummi-Industrie, 2. Auflage, 1991. Auch eine Zugabe dem Elastomerfachmann bekannter basischer Additive, wie z.B. Calciumhydroxid führt daher nicht zu einer signifikanten Verbesserung, sondern im Gegenteil zu einer starken Verschlechterung der Migrationswerte, bzw. des TOC.

Aufgabe der vorliegenden Erfindung ist daher die Bereitstellung von Siliconkautschukzusammensetzungen, die zu Siliconkautschukvulkanisaten verarbeitet werden, einen möglichst geringen Anteil an extrahierbaren Bestandteilen, insbesondere extrahierbaren organischen Bestandteilen, gemessen als TOC, enthalten, gleichzeitig gute mechanische Eigenschaften und hohe Transparenz haben und keine kritischen Inhaltsstoffe aufweisen und somit den Einsatz in Kontakt mit Trinkwasser oder Lebensmitteln oder medizintechnische oder pharmazeutische Anwendungen ermöglichen.

Gegenstand der vorliegenden Erfindung ist eine peroxidischoder additionsvernetzende Siliconkautschukzusammensetzung für den Einsatz im Trinkwasser-, Lebensmittel-, medizinischen- und pharmazeutischen Bereich, enthaltend

- 100 Gewichtsteile (A) mindestens eines Polydiorganosiloxans entsprechend der durchschnittlichen allgemeinen Formel (1)

$$R^1_x R^2_y SiO_{(4-x-y)/2} \qquad (1)$$

worin

- $R^1$ einen einwertigen, gegebenenfalls über eine organische zweiwertige Gruppe an Silicium gebundenen $C_1$ bis $C_{10}$ - Kohlenwasserstoffrest, der aliphatische Kohlenstoff-Kohlenstoff-Mehrfachbindungen enthält, bedeutet,
- $R^2$ eine OH-Gruppe ist oder ein einwertiger, über SiCgebundener $C_1$ bis $C_{10}$ -Kohlenwasserstoffrest ist, welcher keine aliphatischen Kohlenstoff-Kohlenstoff-Mehrfachbindungen enthält, bedeutet,
- x eine positive Zahl ist, mit der Maßgabe, dass durchschnittlich mindestens zwei Reste $R^1$ pro Polydiorganosiloxan-Kette vorhanden sind, und
- y eine Zahl zwischen 1,6 und 2,0 ist,
  und worin die Reste $R^1$ sowie $R^2$ jeweils gleich oder verschieden sind,

- 1 bis 100 Gewichtsteile mindestens eines verstärkenden Füllstoffes (B) mit einer BET-Oberfläche von mindestens 50 m$^2$/g,

- 0,001-5 Gewichtsteile mindestens eines Additivs (C),

  - welcher ausgewählt wird aus der Liste enthaltend Erdalkalisilicate; natürliche oder synthetische Wollastonite mit oder ohne Oberflächenbehandlung; Alumosilicate und deren Natrium-, Kalium- oder Calciumsalze, welche auch als Zeolith oder Molsieb bezeichnet werden und eine Porengrößen von 0,3 -1,0 nm aufweisen,
  - eine mittlere Teilchengröße von 1 bis 30 $\mu$m (gemessen nach DIN 13320) aufweist, und
  - einen pH-Wert von 7,1 bis 12,0 aufweist (gemessen für 5 g in Wasser nach DIN ISO 787/9), sowie Magnesiumhydroxid.

- 0,1 - 5 Gewichtsteile mindestens eines Vernetzers (D) ausgewählt aus der Gruppe enthaltend (D1) Vernetzer für peroxidisch vernetzende Siliconzusammensetzungen und (D2) Kombination aus Vernetzer für additionsvernetzende Siliconzusammensetzungen mit einer ausreichenden Menge mindestens eines Hydrosilylierungskatalysators.

Ein weiterer Gegenstand der vorliegenden Erfindung sind Siliconkautschukvulkanisate für den Einsatz im Trinkwasser-, Lebensmittel-, medizinischen- und pharmazeutischen Bereich, erhältlich durch die Vulkanisation der erfindungsgemäßen, Vernetzer enthaltenden, Siliconkautschukzusammensetzungen. Diese haben bevorzugt die Form von Schläuchen und Formkörpern.

Es können alle dem Fachmann seit langem bekannt Verfahren zur Herstellung solcher Siliconkautschukvulkanisate eingesetzt werden. Geeignete Beispiele bekannter Verarbeitungstechniken für das erfindungsgemäße Verfahren zur Herstellung der Siliconkautschukvulkanisate für den Trinkwasser-, Lebensmittelmedizinischen- und pharmazeutischen Bereich sind:

- Extrusion von Schläuchen,

- Pressvulkanisation oder Spritzguss von Formartikeln.

Das erfindungsgemäße Verfahren enthält optional einen Temperschritt bei dem die Siliconkautschukvulkanisate nach ihrer Herstellung noch in einem Umluftofen für 4-8 h/200 °C getempert werden.

Ein weiterer Gegenstand der vorliegenden Erfindung ist somit auch die Verwendung der erfindungsgemäßen Siliconkautschukvulkanisate im Trinkwasser-, Lebensmittel-, medizinischen- und pharmazeutischen Bereich, bevorzugt in der Form als Schläuche oder Formkörper.

Überraschend zeigt sich bei der vorliegenden Erfindung, dass die Verwendung dieser speziellen basischen Additive (C) in den beschriebene geringen Mengen in den erfindungsgemäßen Siliconkautschukzusammensetzungen zu erfindungsgemäßen Siliconkautschukvulkanisaten führt, die im Extraktionstest gemäß KTW-Leitlinie eine deutliche Absenkung wasserextrahierbarer Anteile zeigen. Diese zeigt sich sowohl bei peroxid- als auch additionsvernetzenden Siliconkautschukzusammensetzungen. Beide Vernetzungsarten sind dem Fachmann seit langem bekannt. Die erfindungsgemäße Siliconkautschukzusammensetzungen kann sowohl als Ein-, Zweioder Mehrkomponentige Zusammensetzung vorliegen bzw. eingesetzt werden. Deren Herstellung ist dem Fachmann seit langem allgemein bekannt und erfolgt im einfachsten Fall durch gleichmäßiges Vermischen der einzelnen Verbindungen zu einer Einkomponentigen Zusammensetzungen (1K).

Die Herstellung einer erfindungsgemäßen Zweikomponentigen Zusammensetzungen (2K) erfolgt ebenfalls durch gleichmäßiges Vermischen der einzelnen Verbindungen, mit der Maßgabe, dass im Fall peroxidischer Mischungen weder die erste Komponente noch die zweite Komponente gleichzeitig die Bestandteile (A) und (D1) enthält. Im Fall von additionsvernetzenden Zusammensetzungen müssen das Organohydrogenpolysiloxan als Vernetzer und der Hydrosilierungskatalysator aus (D2) in unterschiedlichen Komponenten enthalten sein. Analoges gilt für erfindungsgemäße Mehrkomponentige Zusammensetzungen.

Um die Seitenzahl der Beschreibung der vorliegenden Erfindung nicht zu umfangreich zu gestalten, werden nur die bevorzugten Ausführungsformen zu den einzelnen Merkmalen aufgeführt.

Der fachkundige Leser soll diese Art der Offenbarung aber explizit so verstehen, dass damit auch jede Kombination aus unterschiedlichen Bevorzugungsstufen explizit offenbart und explizit gewünscht ist - also jede Kombination sowohl innerhalb einer einzigen Komponente als auch zwischen unterschiedlichen Komponenten.

Bevorzugt sind additionsvernetzende Siliconkautschukzusammensetzungen und deren Vulkanisate, da die Additive (C) deren mechanische Eigenschaften nicht beeinträchtigen. Sie weisen gegenüber peroxidisch vernetzbaren Siliconkautschukzusammensetzungen den Vorteil auf, dass diese keine Spaltprodukte aus Peroxiden während der Vernetzung bilden und sich im organoleptischen Test geschmacksneutral verhalten. Für Trinkwasseranwendungen, wie auch Getränkezubereitungen aus Trinkwasser, können so organoleptisch störende Geschmackskomponenten vermieden werden.

**Komponente (A) der Siliconkautschukzusammensetzung**

Die Zusammensetzung enthält 100 Gewichtsteile (A) mindestens eines Polydiorganosiloxans entsprechend der durchschnittlichen allgemeinen Formel (1) und ist dem Fachmann seit langem bekannt.

$$R^1{}_x R^2{}_y SiO_{(4-x-y)/2} \qquad (1)$$

worin

- $R^1$ einen einwertigen, gegebenenfalls über eine organische zweiwertige Gruppe an Silicium gebundenen $C_1$ bis $C_{10}$ - Kohlenwasserstoffrest, der aliphatische Kohlenstoff-Kohlenstoff-Mehrfachbindungen enthält, bedeutet,
- $R^2$ eine OH-Gruppe ist oder ein einwertiger, über SiCgebundener $C_1$ bis $C_{10}$ -Kohlenwasserstoffrest ist, welcher keine aliphatischen Kohlenstoff-Kohlenstoff-Mehrfachbindungen enthält, bedeutet,
- x eine positive Zahl ist, mit der Maßgabe, dass durchschnittlich mindestens zwei Reste $R^1$ pro Polydiorganosiloxan-Kette vorhanden sind, und
- y eine Zahl zwischen 1,6 und 2,0 ist,

und worin die Reste $R^1$ sowie $R^2$ jeweils gleich oder verschieden sein können.

Die Alkenylgruppen $R^1$ sind einer Anlagerungsreaktion mit einem SiH-funktionellen Vernetzungsmittel und / oder einer peroxidischen Vulkanisation zugänglich. Üblicherweise werden Alkenylgruppen mit 2 bis 6 Kohlenstoffatomen, wie Vinyl, Allyl, Methallyl, 1-Propenyl, 5-Hexenyl, Ethinyl, Butadienyl, Hexadienyl, Cyclopentenyl, Cyclopentadienyl, Cyclohexenyl, vorzugsweise Vinyl und Allyl, besonders bevorzugt Vinyl verwendet.

Die Reste $R^1$ können in jeder Position der Polymerkette, insbesondere an den endständigen Siliciumatomen, gebunden sein.

Beispiele für unsubstituierte Reste $R^2$ sind Alkylreste, wie beispielsweise der Methyl-, Ethyl-, n-Propyl-, iso-Propyl-, n-Butyl-, iso-Butyl-, tert.-Butyl-, n-Pentyl-, iso-Pentyl-, neoPentyl-, tert.-Pentylrest, Hexylreste, wie beispielsweise der n-Hexylrest, Heptylreste, wie der n-Heptylrest, Octylreste, wie der n-Octylrest und iso-Octylreste, wie beispielsweise der 2,2,4-Trimethylpentylrest, Nonylreste, wie beispielsweise der n-Nonylrest, Decylreste, wie der n-Decylrest; Alkenylreste, wie beispielsweise der Vinyl-, Allyl-, n-5-Hexenyl-, 4-Vinylcyclohexyl- und der 3-Norbornenylrest; Cycloalkylreste, wie Cyclopentyl-, Cyclohexyl-, 4-Ethylcyclohexyl-, Cycloheptylreste, Norbornylreste und Methylcyclohexylreste; Arylreste, wie der Phenyl-, Biphenylyl-, Naphthylrest; Alkarylreste, wie beispielsweise o-, m-, p-Tolylreste und Ethylphenyireste; Aralkylreste, wie der Benzylrest, der alphaund der β-Phenylethylrest.

$R^2$ weist vorzugsweise 1 bis 6 Kohlenstoffatome auf. Insbesondere bevorzugt ist $R^1$ Methyl.

Die Struktur der Alkenylgruppen enthaltenden Polydiorganosiloxane (A) kann linear, cyclisch oder auch verzweigt sein. Der Gehalt an verzweigten Polyorganosiloxanen führenden tri- und/oder tetrafunktionellen Einheiten, ist typischerweise sehr gering, nämlich vorzugsweise höchstens 20 Mol-%, insbesondere höchstens 0,1 Mol-%.

Besonders bevorzugt ist die Verwendung möglichst linearer, Vinylgruppen enthaltender Polydimethylsiloxane mit einer Viskosität von vorzugsweise 100 - $40 \times 10^6$ mPa s, insbesondere $20 \times \times 10^3$ .- $40 \times 10^6$ Pas bei 25°C.

Ganz besonders bevorzugt sind solche Polydiorganosiloxane gemäß (A) die auf den jeweiligen Positivlisten für Trinkwasser- und /oder Lebensmittelkontaktanwendungen aufgeführt sind.

## Komponente (B) der Siliconkautschukzusammensetzung

Verstärkende Füllstoffe (B) der erfindungsgemäßen Siliconzubereitung sind dem Fachmann seit langem bekannt. (B) ist feinteilige, gefällte oder pyrogene Kieselsäure, bevorzugt ist es hydrophobierte Kieselsäure. Bevorzugt ist pyrogene hydrophobierte Kieselsäure. (B) hat eine BET-Oberfläche von mindestens 50 m$^2$/g, bevorzugt 100 bis 800 m$^2$/g, besonders bevorzugt 150 bis 400 m$^2$/g.

Es werden 1 bis 100 Gewichtsteile (B), bezogen auf 100 Gewichtsteile (A) eingesetzt. Bevorzugt 10 - 70 Gewichtsteile (B) .

Die Oberflächenbehandlung kann durch die dem Fachmann wohlbekannten Verfahren zur Hydrophobierung feinteiliger Feststoffe erzielt werden. Die Hydrophobierung kann entweder vor der Einarbeitung in das Polyorganosiloxan erfolgen oder auch in Gegenwart eines Polyorganosiloxans nach dem in-situ Verfahren. Beide Verfahren können sowohl im Batch-Prozess als auch kontinuierlich durchgeführt werden. Bevorzugt verwendete Hydrophobierungsmittel sind siliziumorganische Verbindungen, die mit der Füllstoffoberfläche unter Ausbildung kovalenter Bindungen zu reagieren vermögen oder dauerhaft an der Füllstoffoberfläche physisorbiert werden.

Bevorzugte Hydrophobierungsmittel entsprechen den allgemeinen Formeln (2) oder (3) oder (4)

$$R^3_{4-a}SiA_a \qquad (2)$$

$$(R^3_3Si)_bB \qquad (3)$$

$$R^3_zSiO_{(4-z)/2} \qquad (4)$$

worin

- R$^3$ gleich oder verschieden sein kann und einen monovalenten, aliphatisch gesättigten oder ungesättigten, halogensubstituierten oder unsubstituierten Kohlenwasserstoffrest mit 1 bis 12 Kohlenstoffatomen darstellt,

- A Halogen, -OH, -OR$^4$ oder -OCOR$^4$, und

- B -NR$^5_{3-b}$ ist,

- R$^4$ einen monovalenten Kohlenwasserstoffrest mit 1 bis 12 Kohlenstoffatomen darstellt,

- R$^5$ ein Wasserstoffatom ist oder die gleiche Bedeutung wie R$^3$ hat,

- a 1,2 oder 3 ist,

- b 1 oder 2 ist,

- z 1,2 oder 3 ist.

Hierzu zählen beispielsweise Alkylchlorsilane, wie beispielsweise Methyltrichlorsilan, Dimethyldichlorsilan, Trimethylchlorsilan, Octyltrichlorsilan, Octadecyltrichlorsilan, Octylmethyldichlorsilan, Octadecylmethyldichlorsilan, Octyldimethyichlorsilan, Octadecyldimethylchlorsilan und tert.-Butyldimethylchlorsilan; Alkylalkoxysilane, wie beispielsweise Dimethyldimethoxysilan, Dimethyldiethoxysilan, Trimethylmethoxysilan und Trimethylethoxysilan; Trimethylsilanol; zyklische Diorgano(poly)siloxane, wie beispielsweise Octamethylcyclotetrasiloxan, Dekamethylcyclopentasiloxan; lineare Diorganopolysiloxane, wie beispielsweise Dimethylpolysiloxane mit Trimethylsiloxy-Endgruppen sowie Dimethylpolysiloxane mit Silanol- oder Alkoxy-Endgruppen; Disilazane, wie beispielsweise Hexaalkyldisilazane, insbesondere Hexamethyldisilazan, Divinyltetramethyldisilazan, Bis(trifluorpropyl)tetramethyldisilazan; zyklische Dimethylsilazane, wie beispielsweise Hexamethylcyclotrisilazan. Es können auch Mischungen der voranstehend genannten Hydrophobierungsmittel eingesetzt werden. Um die Hydrophobierung zu beschleunigen, ist auch der Zusatz von katalytisch aktiven Additiven, wie beispielsweise Aminen oder Metallhydroxiden, möglich. Die Hydrophobierung kann in einem Schritt unter Verwendung von einem oder mehreren Hydrophobiermitteln, aber auch unter Verwendung von einem oder mehreren Hydrophobiermitteln in mehreren Schritten erfolgen. Ganz besonders bevorzugt sind solche Hydrophobierungsmittel die auf den jeweiligen Positivlisten für Trinkwasser- und /oder Lebensmittelkontaktanwendungen aufgeführt sind.

**Komponente (C) der Siliconkautschukzusammensetzung**

Bezogen auf 100 Gewichtsteile (A) werden 0,001 bis 5, bevorzugt 0,01 bis 2, besonders bevorzugt 0,05 bis 1 Gewichtsteile mindestens eines feinteiligen basischen Additivs (C) eingesetzt.

(C) weist einen pH-Wert (gemessen für 5 g in Wasser nach DIN ISO 787/9) von 7,1 bis 12,0; bevorzugt von 9,5 bis 12,0; besonders bevorzugt 9,5 bis 11,5. Weiterhin weist (C) eine mittlere Teilchengröße von 1 bis 30 μm (gemessen nach DIN 13320) auf. Bevorzugt sind dabei basische Additive, die zudem den Reinheitsanforderungen für den Kontakt mit Trinkwasser und / oder Lebensmitteln (z.B. nach BfR Regularien) erfüllen und in den entsprechenden Positivlisten aufgeführt sind. Beispiele für geeignete basische Additive (C) sind: Erdalkalisilicate, wie Calcium- und / oder Magnesiumsilicate; natürliche oder synthetische Wollastonite sowie Alumosilicate und deren Natrium-, Kalium- oder Calciumsalze, welche dem Fachmann als Molsieb mit Porengrößen von 0,3 -1,0 nm bekannt sind; Magnesiumhydroxid. Bevorzugt sind Calcium-, Magnesiumsilikat, Wollastonit, Alumosilikate (Zeolith, Molsieb) und Magnesiumhydroxid.

Die genannten basischen Additive (C) können ebenfalls mit den unter (B) genannten Hydrophobierungsmitteln behandelt werden. Bevorzugt sind allerdings nicht-hydrophobierte basische Additive (C).

Die basischen Additive (C) können zur Verbesserung der Einarbeitung und zur besseren Homogenisierung der Verteilung in der erfindungsgemäßen Siliconmasse in Form eines sogenannten Masterbatches zur Kautschukmasse zugegeben werden. Zur Herstellung eines solchen Masterbatches werden die basischen Additive (C) in einem geeigneten Polymer vordispergiert, wobei hierfür bevorzugt ein Polydiorganosiloxanen gemäß (A), besonders bevorzugt ein vinylgruppenhaltiges Polydimethylsiloxan, besonders bevorzugt mit einer Viskosität bei Raumtemperatur kleiner 40×10$^6$ mPa.s eingesetzt wird.

**Komponente (D) der Siliconkautschukzusammensetzung**

Der Vernetzer (D) ist dem Fachmann auch seit langem bekannt und ist zu 0,1 - 5 Gewichtsteile, bezogen auf 100 Gewichtsteile (A) enthalten, um eine ausreichende Vulkanisation zu erreichen.

Der Vernetzer wird ausgewählt aus der Gruppe enthaltend (D1) Vernetzer für peroxidisch vernetzende Siliconzusammensetzungen und (D2) Kombination aus Vernetzer für additionsvernetzende Siliconzusammensetzungen mit einer ausreichenden Menge mindestens eines Hydrosilylierungskatalysators.

Bevorzugt sind für:

(D1) ein organisches Peroxid, Hydroperoxid oder eine Mischung aus verschiedenen organischen Peroxiden oder Hydroperoxiden,

(D2) eine Kombination aus einem Organohydrogenpolysiloxan mit der allgemeinen durchschnittlichen Formel (5)

$$R^6{}_c H_d SiO_{(4-c-d)/2} \qquad (5)$$

wobei

$R^6$ ein substituierter oder unsubstituierter einwertiger Kohlenwasserstoffrest ist, der nicht aliphatisch ungesättigt ist, jedes Molekül im Durchschnitt zumindest drei solche an Siliciumatome gebundene Wasserstoffatome aufweist,

c, d unabhängig voneinander positive Zahlen, mit der Maßgabe, dass $1 \le c < 3$, $0 < d \le 1$ und $1 < c + d \le 3$ ist und einem zumindest ein Übergangsmetall enthaltenden Hydrosilylierungskatalysator.

### Komponente (E) der Siliconkautschukzusammensetzung

Zur Regelung der Vernetzungsgeschwindigkeit kann optional noch mindestens ein Inhibitor (E) enthalten sein. Inhibitoren, die die Anlagerung von Si-gebundenem Wasserstoff an aliphatische Mehrfachbindung bei Raumtemperatur verzögern sind dem Fachmann seit langem bekannt. Ist (E) enthalten, dann in Mengen von 0,1 - 2 Gewichtsteile bezogen auf 100 Gewichtsteile (A). Als (E) können alle Inhibitoren verwendet werden, die auch bisher für den gleichen Zweck verwendet werden konnten. Beispiele für Inhibitoren (E) sind 1,3-Divinyl-1,1,3,3-tetramethyldisiloxan, Benzotriazol, Dialkylformamide, Alkylthioharnstoffe, Methylethylketoxim, organische oder siliciumorganische Verbindungen mit einem Siedepunkt von mindestens 25°C bei 1012 mbar (abs.) und mindestens einer aliphatischen Dreifachbindung, wie beispielsweise 1-Ethinylcyclohexan-1-ol, 2-Methyl-3-butin-2-ol, 3-Methyl-1-pentin-3-ol, 2,5-Dimethyl-3-hexin-2,5-diol und 3,5-Dimethyl-1- hexin-3-ol, 3,7-Dimethyl-oct-1-in-6-en-3-ol, eine Mischung aus Diallylmaleinat und Vinylacetat, Maleinsäuremonoester, und Inhibitoren wie die Verbindung der Formel HC≡C-C(CH3)(OH)-CH2-CH2-CH=C(CH3)2, beispielsweise erhältlich unter dem Handelsnamen "Dehydrolinalool" (BASF AG, Ludwigshafen/Deutschland) .

Bevorzugt als Inhibitor sind Ethinylcyclohexanol (ECH), Dehydrolinalool, 3-Methyldodecinol oder ein Diorganosiloxan-Oligomer, das eine durchschnittliche Kettenlänge von bis zu 50 Siloxyeinheiten aufweist und endständig 3-Methyl-3-hydroxy-but-1-in-4-oxy-Gruppen trägt. Besonders bevorzugt sind Ethinylcyclohexanol und das endständig 3-Methyl-3-hydroxy-but-1-in-4-oxy-Gruppen tragende Diorganosiloxan-Oligomer.

### Komponente (F) der Siliconkautschukzusammensetzung

Die erfindungsgemäßen Siliconkautschukzusammensetzungen können wahlweise als weiteren Bestandteil (F) enthalten, wenn diese ebenfalls für den Einsatz im Trinkwasser-, Lebensmittel-, medizinischen- und pharmazeutischen Bereich geeignet bzw. zugelassen sind. Diese Zusätze und ihre Mengen sind dem Fachmann seit langem bekannt und können beispielsweise Dispergierhilfsmittel, Lösungsmittel, Haftvermittler, Pigmente, Farbstoffe, Weichmacher, organische Polymere und Hitzestabilisatoren sein.

Die erfindungsgemäßen Siliconkautschukvulkanisate zeigen im Extraktionstest gemäß KTW-Leitlinie eine deutliche Absenkung wasserextrahierbarer Bestandteile, gemessen als TOC. Gleichzeitig zeigen sie gute mechanische Eigenschaften in einem sehr breiten Temperaturbereich und weisen keine bedenklichen Inhaltsstoffe auf. Wegen ihrer Transparenz sind zudem die durchfließenden Medien gut sichtbar. Damit sind sie für den Einsatz im Trinkwasser- oder Lebensmittel- oder medizintechnischen- oder pharmazeutischen Bereich sehr gut geeignet.

Die nachfolgenden Beispiele beschreiben die prinzipielle Ausführbarkeit der vorliegenden Erfindung, ohne jedoch diese auf die darin offenbarten Inhalte zu beschränken.

In den nachfolgenden Beispielen beziehen sich alle Angaben von Teilen und Prozentsätzen, soweit nicht anders angegeben, auf das Gewicht. Sofern nicht anders angegeben, werden die folgenden Beispiele bei einem Druck der umgebenden Atmosphäre, also bei etwa 1000 hPa, und bei Raumtemperatur, also etwa 20°C bzw. einer Temperatur, die sich beim Zusammengeben der Reaktanten bei Raumtemperatur ohne zusätzliche Heizung oder Kühlung einstellt, durchgeführt.

**Beispiele**

**Herstellung der Vulkanisatplatten bzw. Schläuche**

Die Herstellung einer Prüfplatte (2x2x200 mm) erfolgt durch 15 min/165°C Pressvulkanisation der entsprechenden Zusammensetzung. Die erhaltene Vulkanisatplatte wird anschließend 4h/200°C in einem Umluftofen getempert.

Die Herstellung eines Prüfschlauchs (Durchmesser 6x8 mm) erfolgt durch Extrusion der entsprechenden Zusammensetzung an einem handelsüblichen Extruder mit anschließender Vulkanisation im Heißluftkanal mit einer Bandgeschwindigkeit von 3 m/min bei 300 °C. Anschließend wird ebenfalls bei 4h/200°C in einem Umluftofen getempert.

Die erhaltenen Vulkanisate werden vor einer weiteren Verwendung gemäß ISO 23523 16 h bei Raumtemperatur gelagert.

**Beschreibung der Prüfung nach der KTW-Leitlinie**

Die Eignungsprüfung der so hergestellten Vulkanisatplatten und Schläuche für die Trinkwasseranwendung erfolgt gemäß der KTW-Leitlinie. Darin werden die Reinheitsanforderungen an alle Inhaltsstoffe definiert. Die in der Prüfung ermittelte Konzentration $c_{gemessen}$ wird verwendet, um die maximal am Wasserhahn zu erwartende Konzentration $c_{tap}$ zu berechnen. Dazu wird der TOC-Wert (total organic carbon) als Mittelwert (MW) des nichtflüchtigen Kohlenstoffwertes (NPOC) nach DIN EN 1484 bestimmt und die Konzentration $c_{gemessen}$ nach DIN EN 12873-1 berechnet. Der $c_{tap}$-Wert darf max. dem DWPLL$_{TOC}$ -Wert (Drinking Water Positive List Limit Total Organic Carbon) entsprechen und 0,5 mg/l nicht überschreiten.

$$c_{Tap} = \frac{F_c \times c_{gemessen}}{O/V \times t}$$

Dabei stellt O/V das Oberflächen-/Volumen-Verhältnis nach DIN EN 12873-1 sowie t die Dauer der Migrationsperiode nach DIN EN 12873-1 dar. Für die Berechnung der Migrationsrate wurde für Messungen gemäß KTW-Leitlinie an der Prüfplatte ein Konversionsfaktor $F_c$ = 4 und am Schlauch $F_c$ = 20 verwendet.

Für die Erfüllung der Zertifikatsanforderungen muss das Ergebnis der 3. Migrationsperiode nach DIN EN 12873-1 für die Kategorie Kaltwasser (23 ± 2 °C) für den $c_{tap}$-Wert bei maximal 0,5 mg/l liegen, sowie bei der 7. Migrationsperiode nach DIN EN 12873-1 für die Kategorie Warmwasser (60 ± 2°C) für den $c_{tap}$-Wert bei maximal 0,5 mg/l liegen.

Für flüchtige und extrahierbare Anteile ist gemäß 61. Mitteilung des Bundesgesundheitsblatts zusätzlich ein maximaler Gehalt von 0,5 % zulässig.

**Versuchsergebnisse**

Die Herstellung der Muster erfolgt im ein - oder zweistufigen Verfahren, wie weiter oben im Abschnitt "Herstellung der Vulkanisatplatten bzw. Schläuche" beschrieben.

Eingesetzte Rohstoffe/Vormischungen:

Kommerzielle Vormischungen

Elastosil® R*plus* 4305/70 (lot MH 37342) (Wacker Chemie AG, München)

Elastosil® R*plus* 4305/80 (lot MH35800) (Wacker Chemie AG, München)

Elastosil® LR 3003/30 A/B (lot SL056196) (Wacker Chemie AG, München)

Elastosil® AUX PT 1 (Wacker Chemie AG, München)

Rohstoffe

Vinylterminiertes Polymethylsiloxan (Viskosität 20.000 mPa.s) kristallines Aluminiumsilikat (Zeolith), 30 nm Porenweite

Calciumsilicat (Teilchengröße d50 8,5 $\mu$m)

Calciumhydroxid (Precal® 54; Fa. Schaefer)

**Herstellung eines erfindungsgemäßen KTW- Additiv-Masterbatches**

Dazu wird das basische Additiv (C) in einem geeigneten Polymer (A) vordispergiert.

c1) Batch KTW 1: 50 Gewichtsteile kristallines Aluminiumsilikat (Zeolith), 30 nm Porenweite + 50 Gewichtsteile vinylterminiertes Polymethylsiloxan (Viskosität 20.000 mPa s)

c2) Batch KTW 2: 50 Gewichtsteile Calciumsilicat (Teilchengröße d50: 8,5 $\mu$m) + 50 Gewichtsteile vinylterminiertes Polymethylsiloxan (Viskosität 20.000 mPa s)

**Blindwert**

Die gemessenen Blindwerte des Testwassers (ohne Prüfkörper) bei Lagertemperatur 60°C (Warmwasser) zeigt Tabelle 1.

Tabelle 1

| Migrationsrate | NPOC (MW) in [mg/l] | $C_{tap}$ in [mg/l] |
|---|---|---|
| 1. Migrationsperiode | 0,1646 | - |
| 2. Migrationsperiode | 0,1972 | - |
| 6. Migrationsperiode | 0,3379 | - |
| 7. Migrationsperiode | 0,2072 | - |

**Vergleichsbeispiel 1 - HTV: Messung an Prüfplatte:**

Zusammensetzung: 100 Gewichtsteile ELASTOSIL® R*plus* 4305/70 + 1.5 Gewichtsteile ELASTOSIL® AUX PT 1.

Die gemessenen Werte zeigt Tabelle 2.

Tabelle 2

| Migrationsrate | NPOC (MW) in [mg/l] | $C_{tap}$ [mg/l] |
|---|---|---|
| 1. Migrationsperiode | 0,9618 | 0,638 |
| 2. Migrationsperiode | 0,9443 | 0,598 |
| 6. Migrationsperiode | 0,8698 | 0,426 |
| 7. Migrationsperiode | 0,8393 | 0,506 |

Die Zertifikatsanforderung für die Kategorie Warmwasser (60°C) nach DIN EN 12873-1 wurde NICHT erfüllt.

**Beispiel 1 - HTV: Messung an Prüfplatte:**

Zusammensetzung: 100 Gewichtsteile ELASTOSIL® R*plus* 4305/70 + 0,4 Gewichtsteile des Batch KTW 1 + 1,5 Gewichtsteile ELASTOSIL® AUX PT 1

Die gemessenen Werte zeigt Tabelle 3.

Tabelle 3

| Migrationsrate | NPOC (MW) in [mg/l] | $C_{tap}$ [mg/l] |
|---|---|---|
| 1. Migrationsperiode | 0,4801 | 0,252 |
| 2. Migrationsperiode | 0,5870 | 0,312 |
| 6. Migrationsperiode | 0,5132 | 0,140 |

(fortgesetzt)

| Migrationsrate | NPOC (MW) in [mg/l] | $C_{tap}$ [mg/l] |
|---|---|---|
| 7. Migrationsperiode | 0,4784 | 0,217 |

Die Zertifikatsanforderung für die Kategorie Warmwasser (60°C) nach DIN EN 12873-1 wurde erfüllt.

**Beispiel 2 - HTV: Messung an Prüfplatte:**

Zusammensetzung: 100 Gewichtsteile ELASTOSIL® *Rplus* 4305/70 + 0,4 Gewichtsteile Batch KTW 2 + 1,5 Gewichtsteile ELASTOSIL® AUX PT 1
Die gemessenen Werte zeigt Tabelle 4.

Tabelle 4

| Migrationsrate | NPOC (MW) in [mg/l] | $C_{tap}$ [mg/l] |
|---|---|---|
| 1. Migrationsperiode | 0,5203 | 0,285 |
| 2. Migrationsperiode | 0,5412 | 0,275 |
| 6. Migrationsperiode | 0,4322 | 0,075 |
| 7. Migrationsperiode | 0,5767 | 0,296 |

Die Zertifikatsanforderung für die Kategorie Warmwasser (60°C) nach DIN EN 12873-1 wurde erfüllt.

**Vergleichsbeispiel 2 - HTV: Messung an Prüfplatte:**

Zusammensetzung: 100 Gewichtsteile ELASTOSIL® *Rplus* 4305/70 + 0,35 Gewichtsteile Calciumhydroxid + 1.5 Gewichtsteile ELASTOSIL® AUX PT 1
Die gemessenen Werte zeigt Tabelle 5.

Tabelle 5

| Migrationsrate | NPOC (MW) in [mg/l] | $C_{tap}$ [mg/l] |
|---|---|---|
| 1. Migrationsperiode | 3,6200 | 2,695 |
| 2. Migrationsperiode | | nicht gemessen |
| 6. Migrationsperiode | | nicht gemessen |
| 7. Migrationsperiode | 1,7100 | 1,147 |

Die Zertifikatsanforderung für die Kategorie Warmwasser (60°C) nach DIN EN 12873-1 wurde NICHT erfüllt.

**Vergleichsbeispiel 3 - HTV: Messung am Schlauch**

Zusammensetzung: 100 Gewichtsteile ELASTOSIL® R*plus* 4305/70 + 1.5 Gewichtsteile ELASTOSIL® AUX PT 1
Die gemessenen Werte zeigt Tabelle 6.

Tabelle 6

| Migrationsrate | NPOC (MW) in [mg/l] | $C_{tap}$ [mg/l] |
|---|---|---|
| 1. Migrationsperiode | 2,1900 | 0,610 |
| 2. Migrationsperiode | 1,9700 | 0,546 |
| 6. Migrationsperiode | 2,1400 | 0,594 |
| 7. Migrationsperiode | 2,2600 | 0,621 |

Die Zertifikatsanforderung für die Kategorie Warmwasser (60°C) nach DIN EN 12873-1 wurde NICHT erfüllt.

**Beispiel 3 - HTV: Messung am Schlauch:**

Zusammensetzung: 100 Gewichtsteile ELASTOSIL® R*plus* 4305/70 + 0,4 Gewichtsteile Batch KTW 1 + 1.5 Gewichtsteile ELASTOSIL® AUX PT 1
Die gemessenen Werte zeigt Tabelle 7.

Tabelle 7

| Migrationsrate | NPOC (MW) in [mg/l] | $C_{tap}$ [mg/l] |
|---|---|---|
| 1. Migrationsperiode | 1,9200 | 0,529 |
| 2. Migrationsperiode | 1,6600 | 0,453 |
| 6. Migrationsperiode | 1,5600 | 0,420 |
| 7. Migrationsperiode | 1,7200 | 0,459 |

Die Zertifikatsanforderung für die Kategorie Warmwasser (60°C) nach DIN EN 12873-1 wurde erfüllt.

**Beispiel 4 - HTV: Messung am Schlauch:**

Zusammensetzung: 100 Gewichtsteile ELASTOSIL® R*plus* 4305/70 + 0,4 Gewichtsteile Batch KTW 2 + 1.5 Gewichtsteile ELASTOSIL® AUX PT 1
Die gemessenen Werte zeigt Tabelle 8.

Tabelle 8

| Migrationsrate | NPOC (MW) in [mg/l] | $C_{tap}$ [mg/l] |
|---|---|---|
| 1. Migrationsperiode | 2,3600 | 0,661 |
| 2. Migrationsperiode | 1,9500 | 0,540 |
| 6. Migrationsperiode | 1,8400 | 0,504 |
| 7. Migrationsperiode | 1,8500 | 0,498 |

Die Zertifikatsanforderung für die Kategorie Warmwasser (60°C) nach DIN EN 12873-1 wurde erfüllt.

**Vergleichsbeispiel 4 - HTV: Messung am Schlauch:**

Zusammensetzung: 100 Gewichtsteile ELASTOSIL® Rplus 4305/80 + 1.5 Gewichtsteile ELASTOSIL® AUX PT 1
Die gemessenen Werte zeigt Tabelle 9.

Tabelle 9

| Migrationsrate | NPOC (MW) in [mg/l] | $C_{tap}$ [mg/l] |
|---|---|---|
| 1. Migrationsperiode | 3,4 | 0,943 |
| 2. Migrationsperiode | 2,8 | 0,778 |
| 6. Migrationsperiode | 2,93 | 0,666 |
| 7. Migrationsperiode | 2,28 | 0,471 |

Die Zertifikatsanforderung für die Kategorie Warmwasser (60°C) nach DIN EN 12873-1 wurde erfüllt.

**Beispiel 5 - HTV: Messung am Schlauch:**

Zusammensetzung: 100 Gewichtsteile ELASTOSIL® *Rplus* 4305/80 + 0,35 Gewichtsteile Batch KTW 1 + 1.5 Gewichtsteile ELASTOSIL® AUX PT 1

Die gemessenen Werte zeigt Tabelle 10.

Tabelle 10

| Migrationsrate | NPOC (MW) in [mg/l] | $C_{tap}$ [mg/l] |
|---|---|---|
| 1. Migrationsperiode | 2,8 | 0,763 |
| 2. Migrationsperiode | 2,2 | 0,598 |
| 6. Migrationsperiode | 2,55 | 0,552 |
| 7. Migrationsperiode | 1,85 | 0,342 |

Die Zertifikatsanforderung für die Kategorie Warmwasser (60°C) nach DIN EN 12873-1 wurde mehr als erfüllt, da der Wert nach der 7. Migrationsperiode im Vergleich zu Vergleichsbeispiel 4 erheblich abgesenkt wurde.

**Vergleichsbeispiel 5 - LSR: Messung an Prüfplatte**

300g Mischung wurden aus je 150g A- und B-Komponente ELASTOSIL® LR3003/30 in einem Speedmixer hergestellt und analog zu den HTV-Prüfplatten vulkanisiert.

Die gemessenen Werte zeigt Tabelle 11.

Tabelle 11

| Migrationsrate | NPOC (MW) in [mg/l] | $C_{tap}$ [mg/l] |
|---|---|---|
| 1. Migrationsperiode | 1,6400 | 1,111 |
| 2. Migrationsperiode | | nicht gemessen |
| 6. Migrationsperiode | | nicht gemessen |
| 7. Migrationsperiode | 0,9098 | 0,545 |

Die Zertifikatsanforderung für die Kategorie Warmwasser (60°C) nach DIN EN 12873-1 wurde NICHT erfüllt.

**Beispiel 6 - LSR: Messung an Prüfplatte**

300g Mischung wurden aus je 150g A- und B-Komponente ELASTOSIL® LR 3003/30 + 0,4 Gewichtsteile KTW Batch 1 in einem Speedmixer hergestellt und analog zu den HTV-Prüfplatten vulkanisiert .

Die gemessenen Werte zeigt Tabelle 12.

Tabelle 12

| Migrationsrate | NPOC (MW) in [mg/l] | $C_{tap}$ [mg/l] |
|---|---|---|
| 1. Migrationsperiode | 1,0900 | 0,671 |
| 2. Migrationsperiode | | nicht gemessen |
| 6. Migrationsperiode | | nicht gemessen |
| 7. Migrationsperiode | 0,5702 | 0,274 |

Die Zertifikatsanforderung für die Kategorie Warmwasser (60°C) nach DIN EN 12873-1 wurde erfüllt.

**Beispiel 7 - LSR: Messung an Prüfplatte**

300g Mischung wurden aus je 150g A- und B-Komponente ELASTOSIL® LR 3003/30 + 0,8 Gewichtsteile KTW Batch 1 in einem Speedmixer hergestellt und analog zu den HTV-Prüfplatten vulkanisiert .

Die gemessenen Werte zeigt Tabelle 13.

Tabelle 13

| Migrationsrate | NPOC (MW) in [mg/l] | $C_{tap}$ [mg/l] |
|---|---|---|
| 1. Migrationsperiode | 1,0100 | 0,607 |
| 2. Migrationsperiode | | nicht gemessen |
| 6. Migrationsperiode | | nicht gemessen |
| 7. Migrationsperiode | 0,5587 | 0,264 |

Die Zertifikatsanforderung für die Kategorie Warmwasser (60°C) nach DIN EN 12873-1 wurde erfüllt.

**Beispiel 8 - LSR: Messung an Prüfplatte**

300g Mischung wurden aus je 150g A- und B-Komponente ELASTOSIL® LR 3003/30 + 0,4 Gewichtsteile Batch KTW 2 in einem Speedmixer hergestellt und analog zu den HTV-Prüfplatten vulkanisiert .
Die gemessenen Werte zeigt Tabelle 14.

Tabelle 14

| Migrationsrate | NPOC (MW) in [mg/l] | $C_{tap}$ [mg/l] |
|---|---|---|
| 1. Migrationsperiode | 0,9440 | 0,555 |
| 2. Migrationsperiode | | nicht gemessen |
| 6. Migrationsperiode | | nicht gemessen |
| 7. Migrationsperiode | 0,5185 | 0,232 |

Die Zertifikatsanforderung für die Kategorie Warmwasser (60°C) nach DIN EN 12873-1 wurde erfüllt.

**Beispiel 9 - LSR: Messung an Prüfplatte**

300g Mischung wurden aus je 150g A- und B-Komponente ELASTOSIL® LR 3003/30 + 0,8 Gewichtsteile Batch KTW 2 in einem Speedmixer hergestellt und analog zu den HTV-Prüfplatten vulkanisiert .
Die gemessenen Werte zeigt Tabelle 15.

| Tabelle 15 Migrationsrate | NPOC (MW) in [mg/l] | $C_{tap}$ [mg/l] |
|---|---|---|
| 1. Migrationsperiode | 0,9583 | 0,566 |
| 2. Migrationsperiode | | nicht gemessen |
| 6. Migrationsperiode | | nicht gemessen |
| 7. Migrationsperiode | 0,5595 | 0,265 |

Die Zertifikatsanforderung für die Kategorie Warmwasser (60°C) nach DIN EN 12873-1 wurde erfüllt.

**Patentansprüche**

1. Peroxidisch- oder additionsvernetzende Siliconkautschukzusammensetzung für den Einsatz im TrinkwasserLebensmittel-, medizinischen- und pharmazeutischen Bereich, enthaltend

- 100 Gewichtsteile (A) mindestens eines Polydiorganosiloxans entsprechend der durchschnittlichen allgemeinen Formel (1)

$$R^1{}_x R^2{}_y SiO_{(4-x-y)/2} \qquad (1)$$

worin

- $R^1$ einen einwertigen, gegebenenfalls über eine organische zweiwertige Gruppe an Silicium gebundenen $C_1$ bis $C_{10}$ - Kohlenwasserstoffrest, der aliphatische Kohlenstoff-Kohlenstoff-Mehrfachbindungen enthält, bedeutet,
- $R^2$ eine OH-Gruppe ist oder ein einwertiger, über SiCgebundener $C_1$ bis $C_{10}$ -Kohlenwasserstoffrest ist, welcher keine aliphatischen Kohlenstoff-Kohlenstoff-Mehrfachbindungen enthält, bedeutet,
- x eine positive Zahl ist, mit der Maßgabe, dass durchschnittlich mindestens zwei Reste $R^1$ pro Polydiorganosiloxan-Kette vorhanden sind, und
- y eine Zahl zwischen 1,6 und 2,0 ist,

und worin die Reste $R^1$ sowie $R^2$ jeweils gleich oder verschieden sind,
- 1 bis 100 Gewichtsteile mindestens eines verstärkenden Füllstoffes (B) mit einer BET-Oberfläche von mindestens 50 m2/g,
- 0,001-5 Gewichtsteile mindestens eines Additivs (C),

- welcher ausgewählt wird aus der Liste enthaltend Erdalkalisilicate; natürlich oder synthetische Wollastonite mit oder ohne Oberflächenbehandlung; Alumosilicate und deren Natrium-, Kalium- oder Calciumsalze, welche auch als Zeolith oder Molsieb bezeichnet werden und eine Porengrößen von 0,3 -1,0 nm aufweisen; sowie Magnesiumhydroxid,
- eine mittlere Teilchengröße von 1 bis 30 $\mu$m (gemessen nach DIN 13320) aufweist, und
- einen pH-Wert von 7,1 bis 12,0 aufweist (gemessen für 5 g in Wasser nach DIN ISO 787/9),

- 0,1 - 5 Gewichtsteile mindestens eines Vernetzers (D) ausgewählt aus der Gruppe enthaltend
(D1) Vernetzer für peroxidischvernetzende Siliconzusammensetzungen und (D2) Kombination aus Vernetzer für additionsvernetzende Siliconzusammensetzungen mit einer ausreichenden Menge mindestens eines Hydrosilylierungskatalysators.

2. Siliconkautschukzusammensetzung für den Einsatz im Trinkwasser-, Lebensmittel-, medizinischen- und pharmazeutischen Bereich, gemäß Anspruch 1 **dadurch gekennzeichnet, dass** sie als Ein-, Zwei- oder Mehrkomponentige Zusammensetzung vorliegt.

3. Siliconkautschukzusammensetzung für den Einsatz im Trinkwasser-, Lebensmittel-, medizinischen- und pharmazeutischen Bereich, gemäß Anspruch 1 oder 2 **dadurch gekennzeichnet, dass** sie mindestens 0,01 bis 2 Gewichtsteile mindestens eines Additivs (C) enthält.

4. Siliconkautschukzusammensetzung für den Einsatz im Trinkwasser-, Lebensmittel-, medizinischen- und pharmazeutischen Bereich, gemäß Anspruch 1 bis 3 **dadurch gekennzeichnet, dass** sie additionsvernetzend ist.

5. Siliconkautschukzusammensetzung für den Einsatz im Trinkwasser-, Lebensmittel-, medizinischen- und pharmazeutischen Bereich, gemäß Anspruch 1 bis 4 **dadurch gekennzeichnet, dass** das Additiv (C) ausgewählt wird aus der Liste enthaltend Calcium-, Magnesiumsilikat, Wollastonit, Alumosilikate (Zeolith, Molsieb) und Magnesiumhydroxid.

6. Siliconkautschukzusammensetzung für den Einsatz im Trinkwasser-, Lebensmittel-, medizinischen- und pharmazeutischen Bereich, gemäß Anspruch 1 bis 5 **dadurch gekennzeichnet, dass** das Additiv (C) einen pH-Wert von 9,5 bis 12,0 aufweist.

7. Siliconkautschukzusammensetzung für den Einsatz im Trinkwasser-, Lebensmittel-, medizinischen- und pharmazeutischen Bereich, gemäß Anspruch 1 bis 5 **dadurch gekennzeichnet, dass** das Additiv (C) einen pH-Wert von 9,5 bis 11,5 aufweist.

8. Siliconkautschukvulkanisat für den Einsatz im Trinkwasser-, Lebensmittel-, medizinischen- und pharmazeutischen Bereich, erhältlich durch Vulkanisation der Siliconkautschukzusammensetzung gemäß Anspruch 1 bis 7.

9. Siliconkautschukvulkanisat für den Einsatz im Trinkwasser-, Lebensmittel-, medizinischen- und pharmazeutischen Bereich, gemäß Anspruch 8, in Form von Schläuchen und Formkörpern.

**10.** Verfahren zur Herstellung von Siliconkautschukvulkanisaten für den Trinkwasser-, Lebensmittel-, medizinischen- und pharmazeutischen Bereich, gemäß Anspruch 8 oder 9, **dadurch gekennzeichnet, dass** deren Herstellung über Extrusion, Pressvulkanisation oder Spritzguss erfolgt.

**11.** Verwendung des Siliconkautschukvulkanisates gemäß Anspruch 8 oder 9 im Trinkwasser-, Lebensmittel-, medizinischen- und pharmazeutischen Bereich.

**Claims**

**1.** Peroxidically crosslinking or addition-crosslinking silicone rubber composition for use in the drinking water sector, food and drink sector, medical sector and pharmaceutical sector, containing

- 100 parts by weight (A) of at least one polydiorganosiloxane conforming to the average general formula (1)

$$R^1{}_xR^2{}_ySiO_{(4-x-y)/2} \qquad (1)$$

in which

- $R^1$ is a monovalent $C_1$ to $C_{10}$ hydrocarbyl radical which is optionally bonded to silicon via an organic divalent group and contains aliphatic carbon-carbon multiple bonds,
- $R^2$ is an OH group or a monovalent, SiC-bonded $C_1$ to $C_{10}$ hydrocarbyl radical which does not contain any aliphatic carbon-carbon multiple bonds,
- x is a positive number, with the proviso that an average of at least two $R^1$ radicals per polydiorganosiloxane chain are present, and
- y is a number from 1.6 to 2.0,

and in which the $R^1$ and $R^2$ radicals are each the same or different,
- 1 to 100 parts by weight of at least one reinforcing filler (B) having a BET surface area of at least 50 $m^2/g$,
- 0.001-5 parts by weight of at least one additive (C)

- which is selected from the list comprising alkaline earth metal silicates; natural or synthetic wollastonites with or without surface treatment; aluminosilicates and the sodium, potassium or calcium salts thereof, which are also referred to as a zeolite or molecular sieve and have pore sizes of 0.3-1.0 nm; and magnesium hydroxide,
- has an average particle size of 1 to 30 $\mu$m (measured to DIN 13320), and
- has a pH of 7.1 to 12.0 (measured for 5 g in water to DIN ISO 787/9),

- 0.1-5 parts by weight of at least one crosslinker (D) selected from the group comprising
(D1) crosslinkers for peroxidically crosslinking silicone compositions and (D2) combination of crosslinkers for addition-crosslinking silicone compositions with a sufficient amount of at least one hydrosilylation catalyst.

**2.** Silicone rubber composition for use in the drinking water sector, food and drink sector, medical sector and pharmaceutical sector, according to Claim 1, **characterized in that** it takes the form of a one-, two- or multicomponent composition.

**3.** Silicone rubber composition for use in the drinking water sector, food and drink sector, medical sector and pharmaceutical sector, according to Claim 1 or 2, **characterized in that** it contains at least 0.01 to 2 parts by weight of at least one additive (C).

**4.** Silicone rubber composition for use in the drinking water sector, food and drink sector, medical sector and pharmaceutical sector, according to Claims 1 to 3, **characterized in that** it is addition-crosslinking.

**5.** Silicone rubber composition for use in the drinking water sector, food and drink sector, medical sector and pharmaceutical sector, according to Claims 1 to 4, **characterized in that** the additive (C) is selected from the list comprising calcium silicate, magnesium silicate, wollastonite, aluminosilicates (zeolite, molecular sieve) and magnesium hydroxide.

6. Silicone rubber composition for use in the drinking water sector, food and drink sector, medical sector and pharmaceutical sector, according to Claims 1 to 5, **characterized in that** the additive (C) has a pH of 9.5 to 12.0.

7. Silicone rubber composition for use in the drinking water sector, food and drink sector, medical sector and pharmaceutical sector, according to Claims 1 to 5, **characterized in that** the additive (C) has a pH of 9.5 to 11.5.

8. Silicone rubber vulcanizate for use in the drinking water sector, food and drink sector, medical sector and pharmaceutical sector, obtainable by vulcanization of the silicone rubber composition according to Claims 1 to 7.

9. Silicone rubber vulcanizate for use in the drinking water sector, food and drink sector, medical sector and pharmaceutical sector, according to Claim 8, in the form of hoses and shaped bodies.

10. Process for producing silicone rubber vulcanizates for the drinking water sector, food and drink sector, medical sector and pharmaceutical sector, according to Claim 8 or 9, **characterized in that** they are produced via extrusion, compression vulcanization or injection moulding.

11. Use of the silicone rubber vulcanizate according to Claim 8 or 9 in the drinking water sector, food and drink sector, medical sector and pharmaceutical sector.

**Revendications**

1. Composition de caoutchouc de silicone réticulante par un peroxyde ou par addition pour l'utilisation dans le domaine de l'eau potable, alimentaire, médical et pharmaceutique, contenant

   - 100 parties en poids (A) d'au moins un polydiorganosiloxane correspondant à la formule générale moyenne (1)

   $$R^1{}_x R^2{}_y SiO_{(4-x-y)/2} \qquad (1)$$

   dans laquelle

   - $R^1$ signifie un radical hydrocarboné monovalent en $C_1$ à $C_{10}$, qui contient des liaisons multiples aliphatiques carbone-carbone, éventuellement lié au silicium par l'intermédiaire d'un groupe organique divalent,
   - $R^2$ est un groupe OH ou signifie un radical hydrocarboné monovalent en $C_1$ à $C_{10}$, lié par l'intermédiaire de SiC, qui ne contient pas de liaisons multiples aliphatiques carbone-carbone,
   - x est un nombre positif, à la condition qu'en moyenne au moins deux radicaux $R^1$ soient présents par chaîne polydiorganosiloxane, et
   - y est un nombre compris entre 1,6 et 2,0,

   et dans laquelle les radicaux $R^1$ ainsi que $R^2$ sont à chaque fois identiques ou différents,
   - 1 à 100 parties en poids d'au moins une charge renforçante (B) dotée d'une surface BET d'au moins 50 m$^2$/g,
   - 0,001 à 5 parties en poids d'au moins un additif (C) qui

   - est choisi dans la liste contenant des silicates de métaux alcalino-terreux ; des wollastonites naturelles ou synthétiques avec ou sans traitement de surface ; des aluminosilicates et leurs sels de sodium, de potassium ou de calcium, qui sont désignés également comme zéolithe ou tamis moléculaire et présentent une taille de pores de 0,3 à 1,0 nm ; ainsi que l'hydroxyde de magnésium,
   - présente une taille moyenne de particule de 1 à 30 $\mu$m (mesurée selon la norme DIN 13320), et
   - présente une valeur de pH de 7,1 à 12,0 (mesurée pour 5 g dans de l'eau selon la norme DIN ISO 787/9),

   - 0,1 à 5 parties en poids d'au moins un agent de réticulation (D) choisi dans le groupe contenant
   (D1) des agents de réticulation pour des compositions de silicone réticulantes par un peroxyde et (D2) une combinaison d'agents de réticulation pour des compositions de silicone réticulantes par addition avec une quantité suffisante d'au moins un catalyseur d'hydrosilylation.

2. Composition de caoutchouc de silicone pour l'utilisation dans le domaine de l'eau potable, alimentaire, médical et pharmaceutique, selon la revendication 1 **caractérisée en ce qu'**elle est présente en tant que composition à un composant, deux composants ou plusieurs composants.

3. Composition de caoutchouc de silicone pour l'utilisation dans le domaine de l'eau potable, alimentaire, médical et pharmaceutique, selon la revendication 1 ou 2 **caractérisée en ce qu'**elle contient au moins 0,01 à 2 parties en poids d'au moins un additif (C).

4. Composition de caoutchouc de silicone pour l'utilisation dans le domaine de l'eau potable, alimentaire, médical et pharmaceutique, selon les revendications 1 à 3, **caractérisée en ce qu'**elle est réticulante par addition.

5. Composition de caoutchouc de silicone pour l'utilisation dans le domaine de l'eau potable, alimentaire, médical et pharmaceutique, selon les revendications 1 à 4, **caractérisée en ce que** l'additif (C) est choisi dans la liste contenant un silicate de calcium, un silicate de magnésium, une wollastonite, des aluminosilicates (zéolithe, tamis moléculaire) et l'hydroxyde de magnésium.

6. Composition de caoutchouc de silicone pour l'utilisation dans le domaine de l'eau potable, alimentaire, médical et pharmaceutique, selon les revendications 1 à 5, **caractérisée en ce que** l'additif (C) présente une valeur de pH de 9,5 à 12,0.

7. Composition de caoutchouc de silicone pour l'utilisation dans le domaine de l'eau potable, alimentaire, médical et pharmaceutique, selon les revendications 1 à 5, **caractérisée en ce que** l'additif (C) présente une valeur de pH de 9,5 à 11,5.

8. Vulcanisat de caoutchouc de silicone pour l'utilisation dans le domaine de l'eau potable, alimentaire, médical et pharmaceutique, pouvant être obtenu par vulcanisation de la composition de caoutchouc de silicone selon les revendications 1 à 7.

9. Vulcanisat de caoutchouc de silicone pour l'utilisation dans le domaine de l'eau potable, alimentaire, médical et pharmaceutique, selon la revendication 8, sous forme de tuyaux et de corps moulés.

10. Procédé pour la fabrication de vulcanisats de caoutchouc de silicone pour l'utilisation dans le domaine de l'eau potable, alimentaire, médical et pharmaceutique, selon la revendication 8 ou 9, **caractérisé en ce que** leur fabrication est réalisée par extrusion, vulcanisation sous compression ou moulage par injection.

11. Utilisation du vulcanisat de caoutchouc de silicone selon la revendication 8 ou 9 dans le domaine de l'eau potable, alimentaire, médical et pharmaceutique.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- RU 2293657
- GB 2460513 A
- US 6271299 B1
- US 6239378 B1
- US 6084002 A
- GB 2360780 A
- JP 2019059889 A
- DE 1127586 B
- RU 2285703 C2
- CN 109666301
- WO 0046291 A1